# EUROPÄISCHE PATENTANMELDUNG

(11) **EP 2 679 964 A2**
(43) Veröffentlichungstag der Anmeldung: **01.01.2014**
(21) Anmeldenummer: 13003214.7
(22) Anmeldetag: 24.06.2013
(51) Int. Cl.: G01D 11/24

(54) **Messvorrichtung zum Bestimmen einer Prozessgröße**

(30) Priorität: 26.06.2012 DE 102012012527
(71) Anmelder: KROHNE Analytics GmbH und Dr. Wolfgang Babel, 47058 Duisburg (DE)
(72) Erfinder: Babel, Wolfgang, 71263 Weil der Stadt (DE)
(74) Vertreter: Gesthuysen Patent- und Rechtsanwälte

(57) **Zusammenfassung**

Beschrieben und dargestellt ist eine Messvorrichtung (1) zum Bestimmen einer Prozessgröße - insbesondere zur Flüssigkeits- und/oder Gasanalyse - mit einem Sensorelement (2) zum Messen der Prozessgröße und mit einer Elektronikkomponente (3), wobei das Sensorelement (2) mit der Elektronikkomponente (3) über mindestens einen elektrischen Leiter (4) verbunden ist. Dabei ist eine zwischen dem Sensorelement (2) und der Elektronikkomponente (3) angeordnete Adaptereinheit (5) vorgesehen, die den elektrischen Leiter (4) führt und einen minimalen Abstand zwischen dem Sensorelement (2) und der Elektronikkomponente (3) vorgibt.

Der Erfindung liegt die Aufgabe zugrunde, eine Messvorrichtung vorzuschlagen, die eine möglichst sichere Verbindung zwischen einem Sensorelement und der Elektronikkomponente über eine alternativ zum Stand der Technik ausgestaltete Adaptereinheit beinhaltet.

Die Aufgabe wird bei der in Rede stehenden Messvorrichtung dadurch gelöst, dass das Sensorelement (2) einen erhabenen Abschnitt (10) und die Adaptereinheit (5) eine Anschlagfläche (7) aufweist, die auf dem Abschnitt (10) und/oder um den Abschnitt (10) herum anliegt.

## Beschreibung

Die Erfindung betrifft eine Messvorrichtung zum Bestimmen mindestens einer Prozessgröße - insbesondere zur Flüssigkeits- und/oder Gasanalyse - mit mindestens einem Sensorelement zum Messen der Prozessgröße und mit mindestens einer Elektronikkomponente, wobei das Sensorelement mit der Elektronikkomponente über mindestens einen elektrischen Leiter verbunden ist. Dabei ist mindestens eine Adaptereinheit vorgesehen, die zumindest teilweise zwischen dem Sensorelement und der Elektronikkomponente angeordnet ist und die mindestens abschnittsweise den mindestens einen elektrischen Leiter führt. Weiterhin gibt die Adaptereinheit einen minimalen Abstand zwischen dem Sensorelement und der Elektronikkomponente vor.

In der modernen Prozess- und Automatisierungstechnik werden zum Überwachen und Bestimmen von Prozessgrößen Messvorrichtungen verwendet, die eine von der zu messenden Prozessgröße abhängige Messgröße generieren. Bei der Messgröße handelt es sich im Allgemeinen um ein elektrisches Signal, das der Auswertung und Weiterverarbeitung zugänglich ist. Bei den Prozessgrößen handelt es sich beispielsweise um den Durchfluss, den pH-Wert, den Füllstand oder die Temperatur eines Mediums.

Solche Messvorrichtungen des Standes der Technik verfügen im Allgemeinen zumindest über ein Sensorelement, das zumeist mit einem Prozessmedium in Kontakt bzw. in Wechselwirkung tritt und der eigentlichen Messung dient, und über zumindest eine nachgeordnete Elektronikkomponente, die ggf. die Messung des Sensorelements steuert oder die Messsignale des Sensorelements auswertet oder weiterverarbeitet. Für die Verbindung zwischen dem Sensorelement und der Elektronikkomponente werden im Stand der Technik zumeist Drähte des Sensorelements an die Elektronikkomponente angelötet. Danach werden die Elektronikkomponente und das Sensorelement zusammengeschoben, um mit anderen Komponenten oder einem Gehäuse etc. die Messvorrichtung zu bilden. Durch das Zusammenschieben werden die Drähte teilweise gestaucht oder geknickt oder es kann sich sogar ein Bruch von Lötstellen ergeben. Dadurch entstehen bei der Fertigung und/oder Wartung von den hier in Rede stehenden Messgeräten ggf. hohe Ausschussraten. Dies ist insbesondere bei solchen Messvorrichtungen problematisch, die nicht nur ein einziges mal, also bei der initialen Herstellung, zusammengesetzt werden, sondern die durch ihren Einsatzes bedingt mehrfach zerlegt und zusammengesetzt werden müssen. Die trifft beispielsweise auf Sensorelemente zu, die - je nach Anwendungsfall - nur eine geringe Standzeit haben, beispielsweise auf Sensorelemente zur pH-Wert Messung.

Für eine sichere Abstandseinstellung oder den Schutz eines Sensorelements gibt es eine ganze Reihe von Ausgestaltungen im Stand der Technik, die beispielsweise in den folgenden Druckschriften beschrieben sind: DE 42 34 133 C2, DE 100 64 811 A1, DE 196 10 167 C1, DE 203 13 695 U1, DE 20 2006 018 019 U1, DE 10 2007 001 445 A1 oder DE 10 2008 063 691 A1.

Der Erfindung liegt daher die Aufgabe zugrunde, eine Messvorrichtung vorzuschlagen, die eine möglichst sichere Verbindung zwischen einem Sensorelement und der Elektronikkomponente über eine alternativ zum Stand der Technik ausgestaltete Adaptereinheit beinhaltet.

Die aufgezeigte Aufgabe ist erfindungsgemäß zunächst und im Wesentlichen bei der in Rede stehenden Messvorrichtung dadurch gelöst, dass das Sensorelement einen - insbesondere zylindrischen - Abschnitt an einem der Elektronikkomponente zugewandten Ende aufweist, der gegenüber dem Rest des Endes der Elektronikkomponente erhaben ist, dass die Adaptereinheit an einem dem Sensorelement zugewandten Ende eine Anschlagfläche aufweist und dass die Anschlagfläche auf dem Abschnitt und/oder um den Abschnitt herum anliegt. Die Adaptereinheit verhindert demnach ein weiteres Annähern zwischen Sensorelement und Elektronikkomponente über den minimalen Abstand hinaus und trägt bzw. führt den mindestens einen elektrischen Leiter.

Das Sensorelement verfügt an einem Ende über mindestens einen erhabenen Abschnitt, der in einer Variante insbesondere zylindrisch ausgeformt und in einer ergänzenden oder alternativen Ausgestaltung mittig auf dem Ende des Sensorelements angeordnet ist. Durch diesen erhöhten Abschnitt verläuft in einer Ausgestaltung insbesondere der mindestens eine elektrische Leiter oder sind in einer weiteren Ausgestaltung alle Leiter oder Kontaktmittel des Sensorelements geführt. In einer Ausgestaltung hat der Abschnitt die Form einer Röhre.

Die Adaptereinheit verfügt über eine Anschlagfläche, mit der sie entweder an den erhabenen Abschnitt des Sensorelements anstößt oder diesen umgibt und damit an der restlichen Fläche des Endes des Sensorelements anliegt.

Die Adaptereinheit dient der Stützung des Übergangs zwischen Elektronikkomponente und Sensorelement. Dadurch, dass der direkte Kontakt durch die Adaptereinheit überbrückt wird, lässt sich ein minimaler Abstand zwischen Elektronikkomponente und Sensorelement definieren und eine Führung des mindestens einen elektrischen Leiters realisieren. Es wird eine Stabilisierung in die Messvorrichtung eingebracht, die Belastungen vom elektrischen Leiter bzw. von den jeweiligen Verbindungen zur Elektronikkomponente bzw. zum Sensorelement fernhält. In einer Ausgestaltung handelt es sich bei der Adaptereinheit um ein Kunststoffelement, das insbesondere gegossen oder gespritzt ist.

Für die Führung des mindestens einen elektrischen Leiters weist die Adaptereinheit mindestens eine durchgehende Aussparung - insbesondere in Form eines Lochs oder einer Bohrung - auf. Sind mehrere elektrische Leiter vorgesehen, so wird in einer Ausgestaltung auch die Anzahl der Aussparungen erhöht bis zu vorzugsweise maximal einer Aussparung pro elektrischem Leiter. Bei den Leitern kann es sich insbesondere um mehr oder minder bewegliche Drähte oder um Stifte handeln.

Die Anschlagfläche der Adaptereinheit bietet einen mechanischen Begrenzer der relativen Bewegung zwischen Sensorelement und Elektronikkomponente, wobei sich der minimale Abstand aus der Ausgestaltung der Adaptereinheit und den einander zugewandten Enden des Sensorelements und der Elektronikkomponente ergibt.

In einer Ausgestaltung ist die Anschlagfläche als Steg ausgestaltet, der auf dem Abschnitt des Sensorelements anliegt. In dieser Ausgestaltung ist die Anschlagfläche beispielsweise eine gerade verlaufende Kante bzw. ein gegenüber dem restlichen Anteil des betroffenen Endes der Adaptereinheit erhöhter Steg, mit dem die Adaptereinheit an den erhöhten Abschnitt des Sensorelements anstößt.

In einer alternativen Ausgestaltung ist die Anschlagfläche als - insbesondere teilkreisförmiges - Bogenelement ausgeführt, das um den Abschnitt des Sensorelements herum anliegt. Die Anschlagfläche grenzt dabei als Teil der Adaptereinheit in einer Ausgestaltung an einen teilweise zylindrischen Bogen an. Ein solcher Teil eines Zylinders ist in einer weiteren Ausgestaltung durch wenigstens ein Bein oder eine Strebe gebildet, die sich an den Grundkörper der Adaptereinheit anschließt und an die wiederum die Anschlagfläche als Bogenelement angrenzt. Die Adaptereinheit verfügt dabei vorzugsweise über mindestens eine seitliche Aussparung bis zur Anschlagfläche, durch die Material und Gewicht eingespart werden.

In einer weiteren Ausgestaltung verfügt die Adaptereinheit über ein Ende, das dem Sensorelement oder der Elektronikkomponente zugewandt ist und das derartig ausgestaltet ist, dass sich zwischen der Adaptereinheit und dem Sensorelement bzw. zwischen der Adaptereinheit und der Elektronikkomponente zumindest teilweise ein Formschluss ergibt. Ein Formschluss - beispielsweise durch ein gegenseitiges Einschnappen der Komponenten - erlaubt es beispielsweise, die Adaptereinheit mit der Elektronikkomponente bzw. mit dem Sensorelement in einem Schritt einer Fertigung verliersicher miteinander zu verbinden, so dass für weitere Schritt ein sicherer Transport möglich ist.

Für eine vereinfachte Fertigung ist in einer Ausgestaltung vorgesehen, dass die Elektronikkomponente in einer - insbesondere zumindest teilweise vergossenen - Teilkomponente angeordnet ist. Um elektronische Bauteile vor der Einwirkung von Feuchtigkeit zu schützen und auch um eine erhöhte Sicherheit zu gewährleisten, werden im Stand der Technik häufig Vergüsse angewendet. Bei der Ausgestaltung ist es vorgesehen, dass die Elektronikkomponente in einer vorzugsweise bereits vergossenen Teilkomponente der gesamten Messvorrichtung angeordnet ist bzw. eine solche bildet. Vorzugsweise reicht mindestens ein elektrischer Leiter oder reichen entsprechend viele elektrische Leiter aus der Teilkomponente und somit in einer Ausgestaltung auch aus dem Verguss heraus, um über bzw. durch die Adaptereinheit mit dem Sensorelement verbunden zu werden.

In einer weiteren Ausgestaltung ist in der Teilkomponente, die die Elektronikkomponente umfasst, wenigstens eine elektronische Komponenten tragende Leiterplatte vorhanden, die insbesondere durch ein im Wesentlichen stiftförmiges Halteelement fixiert ist, wobei das Halteelement sich insbesondere an der dem Sensorelement gegenüberliegenden Seite der Leiterplatte befindet. Weiterhin ist in der Teilkomponente in einer Ausgestaltung wenigstens eine Hülse vorgesehen, deren Wand teilweise rosettenförmig ausgestaltet ist und dadurch ein Vergießen der Teilkomponente von der Seite der Rosette aus erlaubt.

Eine weitere Ausgestaltung sieht vor, dass mindestens eine Hülle vorgesehen ist. Dabei umgibt die Hülle mindestens das Sensorelement zumindest teilweise und ist mit der Teilkomponente - insbesondere über eine drehende Bewegung - verbindbar. Eine drehende Verbindung wird beispielsweise über ein Innen- und ein zugehöriges Außengewinde realisiert.

In einer anderen Ausgestaltung grenzt der mindestens eine elektrische Leiter - insbesondere in Form eines Stifts - an ein Ende des Sensorelements oder an ein Ende der Elektronikkomponente an. In dieser Ausgestaltung wird somit das Sensorelement bzw. die Elektronikkomponente von dem mindestens einen elektrischen Leiter überragt.

Bei den vorhergehenden Ausgestaltungen kann das Sensorelement dem Messen des pH-Werts und/oder des Chlorgehalts und/oder des Sauerstoffgehalts dienen. Weitere Messgrößen können beispielsweise Durchfluss, Leitfähigkeit, Temperatur, Sauerstoffgehalt oder Füllstand sein.

Im Einzelnen gibt es eine Vielzahl von Möglichkeiten, die erfindungsgemäße Messvorrichtung auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: eine schematische, im Wesentlichen die funktionalen Wirkzusammenhänge verdeutlichende Darstellung einer Messvorrichtung im Schnitt,
- Fig. 2: eine räumliche Darstellung eines Ausschnitts von einigen Elementen einer Messvorrichtung gemäß einer ersten Variante,
- Fig. 3: eine räumliche Darstellung eines Ausschnitts von einigen Elementen einer Messvorrichtung gemäß einer zweiten Variante,
- Fig. 4: eine räumliche Darstellung eines weiteren Ausschnitts von einigen Elementen einer Messvorrichtung,
- Fig. 5: eine räumliche Darstellung eines weiteren Ausschnitts von einigen Elementen der Messvorrichtung der Fig. 2 und
- Fig. 6: eine Darstellung der Anordnung der Fig. 3 mit einer Hülse.

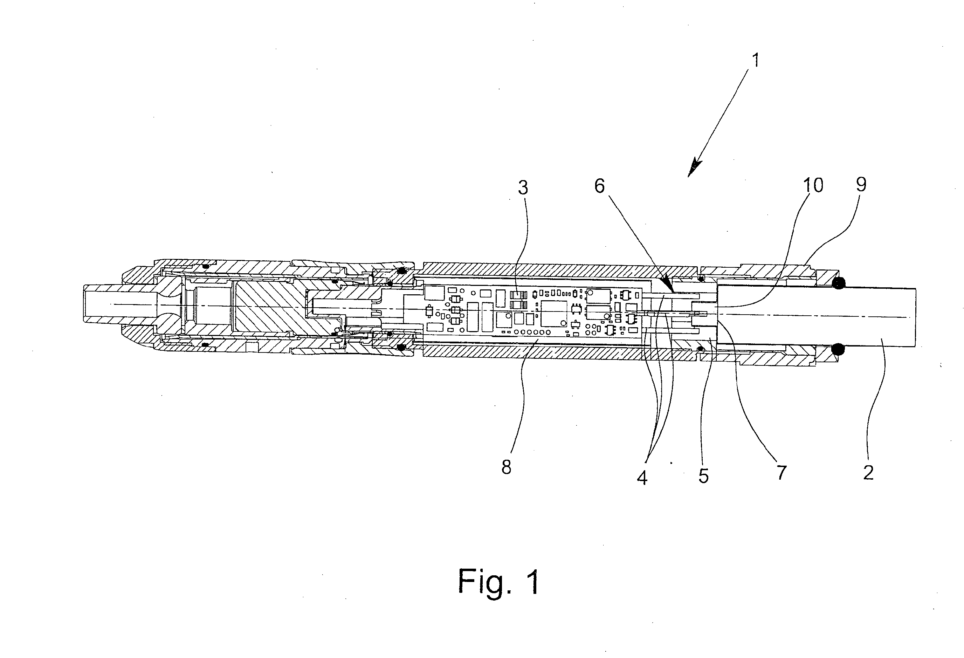

In der Fig. 1 ist ein Schnitt durch eine erfindungsgemäße Messvorrichtung 1 dargestellt, die insbesondere der Messung des pH-Werts und der Temperatur dient. Dafür ist das Sensorelement 2 entsprechend als Glaskörper mit auf den pH-Wert bzw. die Temperatur empfindlichen Elementen ausgeführt. An das Sensorelement 2 grenzt eine Elektronikkomponente 3 an, die hier über wenigstens eine Leiterplatte mit mehreren Bauteilen verfügt. Die Verbindung zwischen Elektronikkomponente 3 und Sensorelement 2 erfolgt über elektrische Leiter 4. Zum Schutz dieser elektrischen Leiter 4 und der Kontaktierungen über Lötstellen ist die Adaptereinheit 5 zwischen einem Ende der Elektronikkomponente 3 und dem Sensorelement 2 angeordnet. In der Adaptereinheit 5 werden die elektrischen Leiter 4 geführt und wird durch die Adaptereinheit 5 ein minimaler Abstand zwischen der Elektronikkomponente 3 und dem Sensorelement 2 definiert. Für diese Zwecke verfügt die Adaptereinheit 5 über durchgehende Aussparungen 6, in denen die elektrischen Leiter 4 verlaufen. Weiterhin sind an den Enden der Adaptereinheit 5 Anschlagsflächen 7 vorgesehen, die rein mechanisch ein weiteres Zusammenschieben von Elektronikkomponente 3 und Sensorelement 2 aneinander verhindern.

Die Elektronikkomponente 3 ist für eine vereinfachte Montage eine bereits vergossene Teilkomponente 8, aus der die elektrischen Leiter 4 mit einer passenden Länge herausragen. Diese Teilkomponente 8 kann insbesondere auch als Steckerkopf bezeichnet werden. Das Sensorelement 2 wird von einer Hülse 9 umgeben, die über eine Drehbewegung mit der Teilkomponente 8 verbunden wird. Bei der Befestigung werden dabei insbesondere die Elektronikkomponente 3 und das Sensorelement 2 nicht gegeneinander verdreht, so dass auch keine diesbezüglichen Kräfte auf die elektrischen Leiter 4 bzw. die Kontaktierungen wirken.

Eine Besonderheit des Sensorelements 2 besteht noch darin, dass das Sensorelement 2, das im Wesentlichen wie die gesamte Messvorrichtung rotationssymmetrisch ausgestaltet ist, an dem der Elektronikkomponente 3 zugewandten Ende mittig einen erhöhten Abschnitt 10 aufweist.

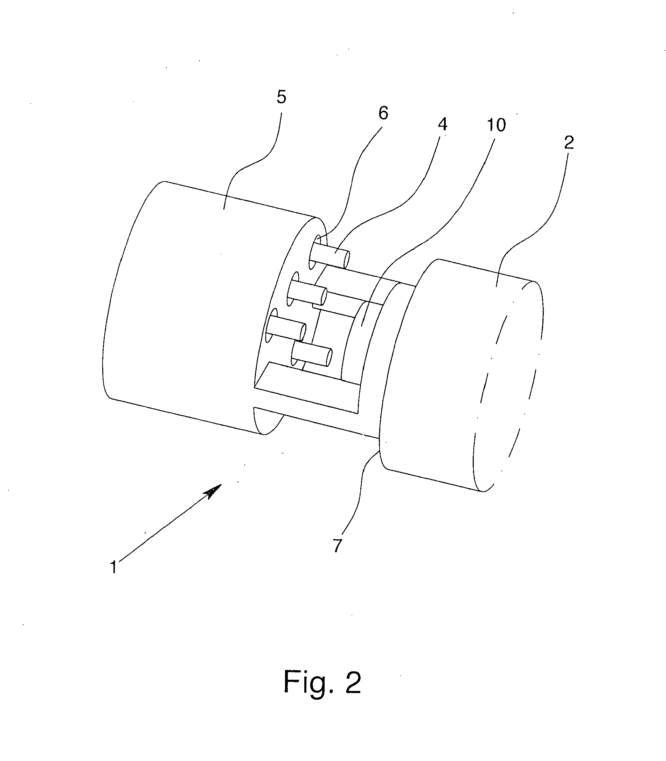

Die Fig. 2 zeigt einen Abschnitt zwischen der - hier nicht dargestellten - Elektronikkomponente und dem Sensorelement 2. Für die Übersichtlichkeit sind die elektrischen Leiter (wie im Stand der Technik üblich: Drähte), über die das Sensorelement 2 verfügt, nicht dargestellt. Die elektrischen Leiter 4 der Elektronikkomponente 3 ragen durch die Aussparungen 6 der Adaptereinheit 5 in Richtung des Sensorelements 2 und werden mit den - hier nicht dargestellten - Drähten der Sensoren verlötet. Die Adaptereinheit 5 hat im Wesentlichen die Form eines Vollzylinders, an denen sich zwei Beine anschließen, die wiederum durch einen teilkreisförmigen Bogen als Anschlagfläche 7 endseitig miteinander verbunden sind. Durch diese Form ergibt sich gleichsam ein seitliches Fenster als Aussparung in der Adaptereinheit 5. Zwischen den Beinen und umfasst von dem Bogen befindet sich der Abschnitt 10 des Sensorelements 2, der gegenüber der übrigen Fläche des Endes des Sensorelements 2 erhöht ist. Zu erkennen ist, dass durch die Adaptereinheit 5 ein wohldefinierter minimaler Abstand zwischen Sensorelement 2 und Elektronikkomponente 3 vorgegeben wird und dass gleichzeitig ein offener Raum für die Verbindung der elektrischen Kontakte erzeugt und geschützt wird.

Eine - nicht dargestellte - Alternative bzw. Ergänzung zu der in der Fig. 2 dargestellten Ausgestaltung besteht darin, dass die elektrischen Leiter 4 nicht durch die Adaptereinheit 5 hindurchreichen, sondern innerhalb der Adaptereinheit 5 auf Lötkontakten münden, die wiederum in die Aussparungen der Adaptereinheit 5 fest eingepresst sind und teilweise aus der Adaptereinheit 5 herausragen. An diese Lötkontakte werden dann die Drähte des Sensors bzw. der Sensoren in weiteren Fertigungsschritten angelötet. Mit anderen Worten: Die Adaptereinheit 5 dieser - nicht dargestellten - Ausgestaltung verfügt über fest eingepresste Steckerbuchsen-Lötkontakte.

Dabei ist beispielsweise folgender Ablauf von Fertigungsschritten vorgesehen: Die Teilkomponente 8 wird als vergossener Steckerkopf ohne die Adaptereinheit 5 gefertigt. Die Drähte des Sensorelements 2 werden - beispielsweise von einem Hersteller des Sensorelements - an die Lötkontakte der Adaptereinheit 5 angelötet. Dann werden die elektronischen Leiter 4 der Elektronikkomponente, die aus der vergossenen Teilkomponente 8 herausragen, in die Adaptereinheit 5 eingebracht. Anschließend wird die Hülle 9 mit der Teilkomponente 8 verbunden, insbesondere verschraubt, und beispielsweise über ein zumindest teilweise rosettenförmiges Ende der Hülle 9 wird die Anordnung von der dem Sensorelement 2 zugewandten Seite aus vergossen.

In einer Kombination können auch die elektrischen Leiter 4 teilweise aus der Adaptereinheit 5 herausragen und teilweise auf der Höhe der zuvor bezeichneten Lötkontakte münden.

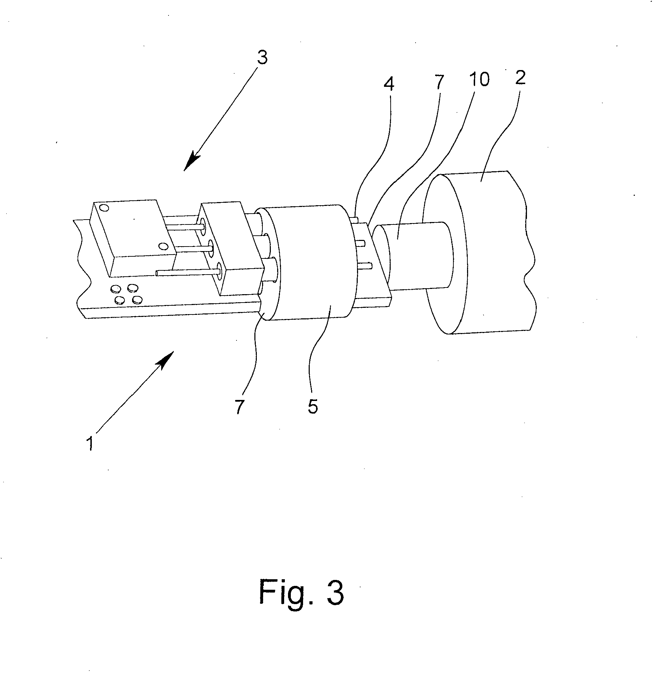

Die Fig. 3 zeigt eine Variante der Messvorrichtung 1 zu der gemäß Fig. 2, wobei hier der Unterschied darin besteht, dass die Adaptereinheit 5 mit einem Steg als Anschlagfläche 7 auf den erhöhten Abschnitt 10 des Sensorelements 2 trifft. Mit dem anderen Ende stößt die Adaptereinheit 5 an die Leiterplatte der Elektronikkomponente 3, auf der sich die Bauteile zur Realisierung einer Schaltung befinden. Die elektrischen Leiter 4 sind oberhalb der Leiterplatte angeordnet und gehen damit von der Elektronikkomponente 3 aus. In einer weiteren - nicht dargestellten - Ausgestaltung befindet sich in einer wie in der Fig. 3 im Wesentlichen stegförmig ausgestalteten Anschlagfläche 7 eine passende zum erhöhten Abschnitt 10 des Sensorelements 2 ausgestaltete Aussparung, die teilweise den erhöhten Abschnitt 10 aufnimmt und dadurch der zusätzlichen Fixierung dient.

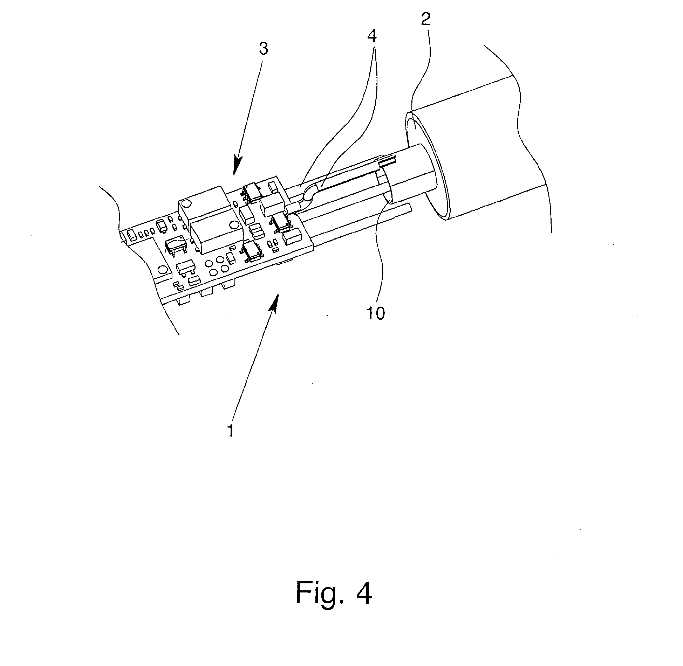

In der Fig. 4 ist die Adaptereinheit 5 fortgelassen, so dass die Anbindung der elektrischen Leiter 4 an die Leiterplatte der Elektronikkomponente 3 besser zu erkennen ist. Bei den elektrischen Leitern 4 handelt es sich hier insbesondere um vier Stifte, die unterschiedlich geführt sind. Drei Leiter liegen in einer Ebene und der vierte Stift ist oberhalb des mittleren Stifts der drei Stift nach einer Abwinklung erhöht geführt. Durch eine solche Anordnung kann für die Montage die richtige Orientierung der Komponenten zueinander gewährleistet werden. Der untere, mittlere Stift wird in den erhöhten Abschnitt 10 des Sensorelements 2 eingeführt. Je nach der Anordnung der weiteren Komponenten kann es auch erforderlich sein, dass mehr als nur ein Stift gekröpft ist.

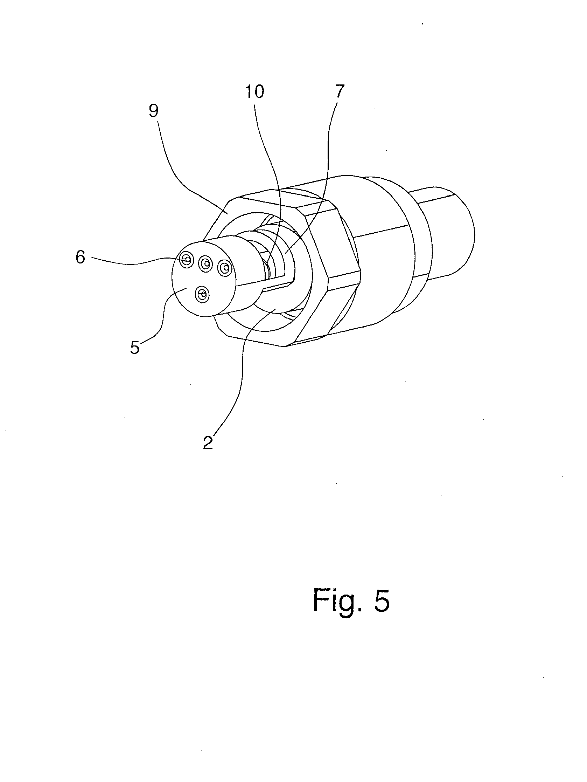

Die Fig. 5 zeigt ein Sensorelement 2 der Messvorrichtung 1 in dem Zustand, dass das Sensorelement 2 teilweise von einer Hülle 9 umgeben ist, die bei der weiteren Montage vorzugsweise in die Teilkomponente 8 eingeschraubt wird, die die Elektronikkomponente 3 umfasst. Die dem Sensorelement 2 zugewandte Anschlagfläche 7 der Adaptereinheit 5 besteht aus dem Bogenelement, das den erhöhten Abschnitt 10 teilweise umfasst. Zu erkennen sind am der Elektronikkomponente zugewandten Ende der Adaptereinheit 5 die vier durchgehenden Aussparungen 6, die die elektrischen Leiter aufnehmen und führen und die hier konisch für ein erleichtertes Einbringen der Leiter ausgestaltet sind.

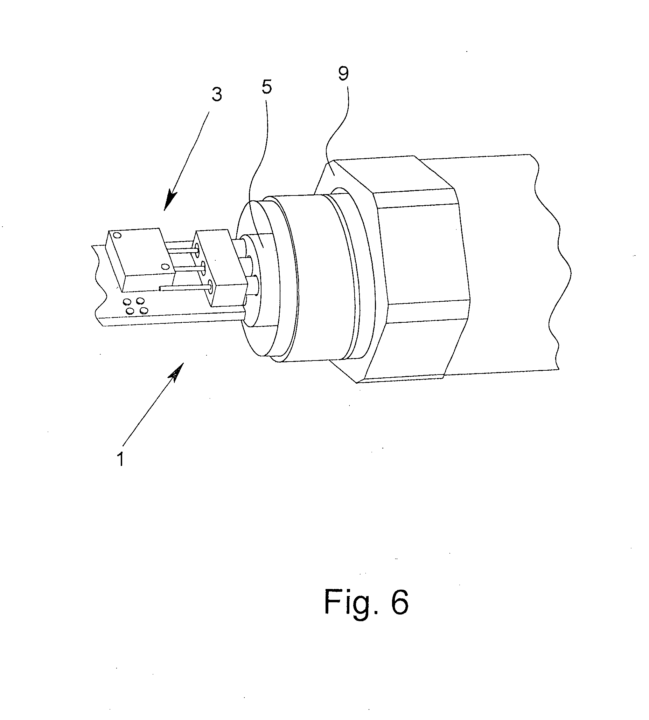

In der Fig. 6 ist das Außengewinde der Hülle 9 zu sehen, über das die Hülle 9 mit der Teilkomponente drehend verbunden wird. Die Montage der Komponenten der Messvorrichtung erfolgt dabei insbesondere derart, dass nach dem Verbindung der Elektronikkomponente 3 mit dem Sensorelement 2 diese nicht gegeneinander verdreht werden. Die Adaptereinheit 5 begrenzt auch hier den minimalen Abstand den die Elektronikkomponente 3 zum Sensorelement einnehmen kann.

## Patentansprüche

1. Messvorrichtung (1) zum Bestimmen mindestens einer Prozessgröße - insbesondere zur Flüssigkeits- und/oder Gasanalyse - mit mindestens einem Sensorelement (2) zum Messen der Prozessgröße und mit mindestens einer Elektronikkomponente (3), wobei das Sensorelement (2) mit der Elektronikkomponente (3) über mindestens einen elektrischen Leiter (4) verbunden ist, wobei mindestens eine zumindest teilweise zwischen dem Sensorelement (2) und der Elektronikkomponente (3) angeordnete Adaptereinheit (5) vorgesehen ist und wobei die Adaptereinheit (5) mindestens abschnittsweise den mindestens einen elektrischen Leiter (4) führt und einen minimalen Abstand zwischen dem Sensorelement (2) und der Elektronikkomponente (3) vorgibt,
**dadurch gekennzeichnet,**
**dass** das Sensorelement (2) einen - insbesondere zylindrischen - Abschnitt (10) an einem der Elektronikkomponente (3) zugewandten Ende aufweist, der gegenüber dem Rest des Endes der Elektronikkomponente (3) erhaben ist, dass die Adaptereinheit (5) an einem dem Sensorelement (2) zugewandten Ende eine Anschlagfläche (7) aufweist und dass die Anschlagfläche (7) auf dem Abschnitt (10) und/oder um den Abschnitt (10) herum anliegt.

2. Messvorrichtung (1) nach Anspruch 1, **dadurch gekennzeichnet, dass** die Anschlagfläche (7) als Steg ausgestaltet ist, der auf dem Abschnitt (10) des Sensorelements (2) anliegt.

3. Messvorrichtung (1) nach Anspruch 1, **dadurch gekennzeichnet, dass** die Anschlagfläche (7) als - insbesondere teilkreisförmiges - Bogenelement ausgestaltet ist, das um den Abschnitt (10) des Sensorelements (2) herum anliegt.

4. Messvorrichtung (1) nach einem der Ansprüche 1 bis 3, **dadurch gekennzeichnet, dass** die Adaptereinheit (5) für die Führung des mindestens einen elektrischen Leiters (4) mindestens eine durchgehende Aussparung (6) - insbesondere in Form eines Lochs oder einer Bohrung - aufweist.

5. Messvorrichtung (1) nach einem der Ansprüche 1 bis 4, **dadurch gekennzeichnet, dass** die Adaptereinheit (5) an mindestens einem dem Sensorelement (2) oder der Elektronikkomponente (3) zugewandten Ende derartig ausgestaltet ist, dass sich zwischen der Adaptereinheit (5) und dem Sensorelement (2) bzw. zwischen der Adaptereinheit (5) und der Elektronikkomponente (3) zumindest teilweise ein Formschluss ergibt.

6. Messvorrichtung (1) nach einem der Ansprüche 1 bis 5, **dadurch gekennzeichnet, dass** die Elektronikkomponente (3) in einer - insbesondere zumindest teilweise vergossenen - Teilkomponente (8) angeordnet ist.

7. Messvorrichtung (1) nach Anspruch 6, **dadurch gekennzeichnet, dass** mindestens eine Hülle (9) vorgesehen ist, dass die Hülle (9) mindestens das Sensorelement (2) zumindest teilweise umgibt und dass die Hülle (9) mit der Teilkomponente (8) - insbesondere über eine drehende Bewegung - verbindbar ist.

8. Messvorrichtung (1) nach einem der Ansprüche 1 bis 7, **dadurch gekennzeichnet, dass** der mindestens eine elektrische Leiter (4) - insbesondere in Form eines Stifts - an ein Ende des Sensorelements (2) oder an ein Ende der Elektronikkomponente (3) angrenzt.

9. Messvorrichtung (1) nach einem der Ansprüche 1 bis 8, **dadurch gekennzeichnet, dass** das Sensorelement (2) zum Messen des pH-Werts und/oder des Chlorgehalts und/oder des Sauerstoffgehalts dient.
